**Europäisches Patentamt**

**European Patent Office**

**Office européen des brevets**

(19)

(11) Veröffentlichungsnummer: **0 220 383**
**B1**

(12) **EUROPÄISCHE PATENTSCHRIFT**

(45) Veröffentlichungstag der Patentschrift:
05.09.90

(21) Anmeldenummer: **86109612.1**

(22) Anmeldetag: **14.07.86**

(51) Int. Cl.⁵: **F01C 21/06, F02B 55/06**

(54) **Drehkolbenmaschine.**

(30) Priorität: **08.10.85 CH 4334/85**

(43) Veröffentlichungstag der Anmeldung:
**06.05.87 Patentblatt 87/19**

(45) Bekanntmachung des Hinweises auf die Patenterteilung:
**05.09.90 Patentblatt 90/36**

(84) Benannte Vertragsstaaten:
**AT BE DE FR GB IT NL SE**

(56) Entgegenhaltungen:
**DE-A- 3 322 235**
**FR-A- 994 396**
**FR-A- 1 351 715**
**FR-A- 2 289 732**
**US-A- 4 102 615**

(73) Patentinhaber: **Wankel, Felix, Dr. h.c.,**
**Fraunhoferstrasse 10, D-8990 Lindau(DE)**

(72) Erfinder: **Wankel, Felix, Dr. h.c., Fraunhoferstrasse 10,**
**D-8990 Lindau(DE)**

(74) Vertreter: **Quehl, Horst M., Dipl.-Ing.,**
**Seestrasse 640 Postfach 90,**
**CH-8706 Meilen/Zürich(CH)**

ACTORUM AG

**Beschreibung**

Die Erfindung betrifft eine innenachsige Drehkolbenmaschine mit den Merkmalen des Oberbegriffs des Patentanspruchs 1.

Eine Drehkolbenmaschine dieser Art ist bekannt durch die EP-A-0167846. Für bestimmte Anwendungen, bei denen eine starke Erwärmung der miteinander in Eingriff arbeitenden Läufer auftritt, ist bei diesen Maschinen die Abführung der Wärme von den Läufern unzureichend. Insbesondere ist keine befriedigende Lösung für die Kühlung des Aussenläufers derartiger Maschinen bekannt.

Der Erfindung liegt die Aufgabe zugrunde, eine Drehkolbenmaschine der genannten Art zu finden, die aufgrund einer verhältnismässig einfachen Konstruktion eine gute Kühlung der Eingriffsteile ihres Aussenläufers aufweist. Die Lösung dieser Aufgabe erfolgt aufgrund der kennzeichnenden Merkmale des Patentanspruchs 1.

Im folgenden wird die Erfindung anhand von in den Zeichnungen dargestellten Ausführungsbeispielen näher erläutert.

Es zeigen:

Fig.1 und 2 einen Axial- und Radialschnitt durch ein Ausführungsbeispiel einer erfindungsgemässen innenachsigen Drehkolbenmaschine,

Fig.3 einen axialen Teilquerschnitt durch eine Ausführungsform eines Aussenläufers einer erfindungsgemässen Drehkolbenmaschine,

Fig.4 einen Radialschnitt durch ein Eingriffsteil des Aussenläufers nach Fig.3,

Fig.5 einen weiteren Radialschnitt entlang der Linie V-V der Fig.3,

Fig.6 einen axialen Teilquerschnitt durch eine weitere Ausführungsform eines Aussenläufers mit angrenzendem Gehäusewandteil,

Fig.7 einen zum Teilquerschnitt nach Fig.6 winkelversetzten axialen Teilquerschnitt,

Fig.8 einen axialen Teilquerschnitt durch eine weitere Ausführungsform eines Aussenläufers mit angrenzendem Gehäusewandteil und

Fig.9 und 10 einen Axial- und Radialschnitt einer weiteren Ausführungsform einer Drehkolbenmaschine.

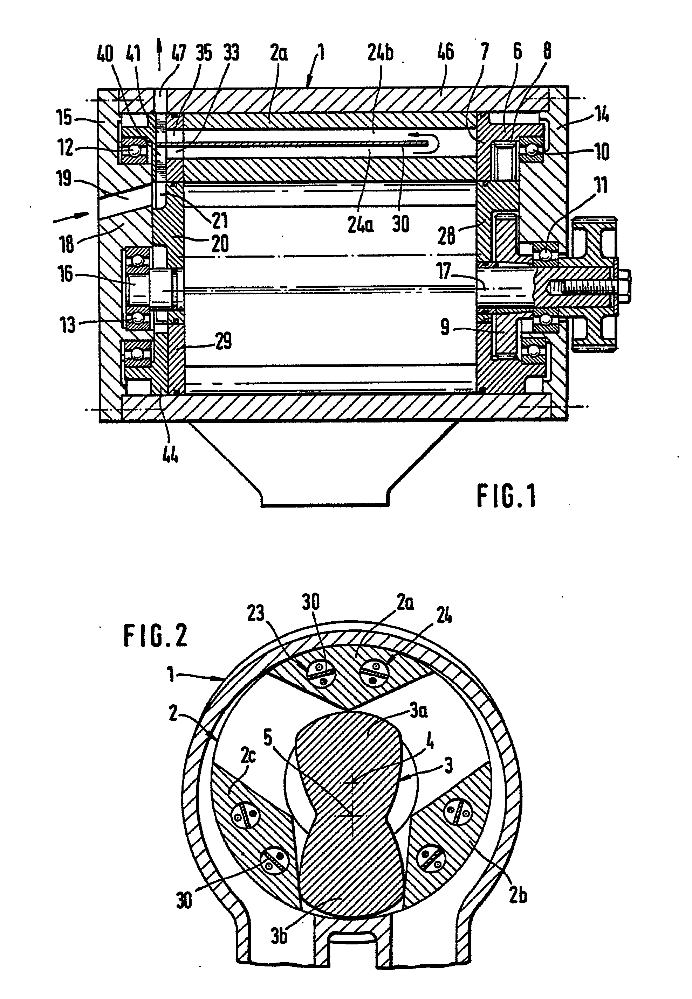

Der als Beispiel in den Fig.1 und 2 dargestellte Typ einer innenachsigen Drehkolbenmaschine hat einen von einem Gehäuse 1 umschlossenen Aussenläufer 2 mit drei Eingriffsteilen 2a,2b,2c, der seinerseits einen Innenläufer 3 mit zwei Eingriffsteilen 3a,3b einschliesst, so dass sich beide Läufer 2,3 im Drehzahlverhältnis von 2:3 um ihre im Abstand voneinander ortsfest relativ zum Gehäuse 1 angeordneten Achsen 4,5 drehen.

An einem axialen Ende der Maschine stehen beide Läufer 2,3 über Zahnräder miteinander in Antriebsverbindung, wofür an einem Nabenteil 6 einer die Eingriffsteile 2a,2b,2c miteinander verbindenden Seitenwand 7 des Aussenläufers ein Hohlzahnrad 8 angeformt ist, das ein mit dem Innenläufer 3 verbundenes Zahnrad 9 kämmend umschliesst. Das Grössenverhältnis zwischen den Teilungskreisen beider Zahnräder 8,9 entspricht dem Drehzahlverhältnis zwischen beiden Läufern, und besonders bei Drehzahlverhältnissen von 2:3, 3:4, 4:5 usw. überdeckt das innere Zahnrad 9 einen wesentlichen Teil der Seite des Aussenläufers 2, so dass die Zufuhr oder Abfuhr von Kühlluft zu dem Aussenläufer 2 von dieser Seite aus erschwert ist. Um dennoch die Eingriffsteile 2a,2b,2c des Aussenläufers 2 kühlen zu können, erfolgt entsprechend den Darstellungen der Fig.1 bis 8 die Zu- und Abfuhr von Kühlluft auf der der Antriebsverbindung 8,9 abgekehrten Seite des Aussenläufers 2, wie im folgenden noch näher beschrieben wird.

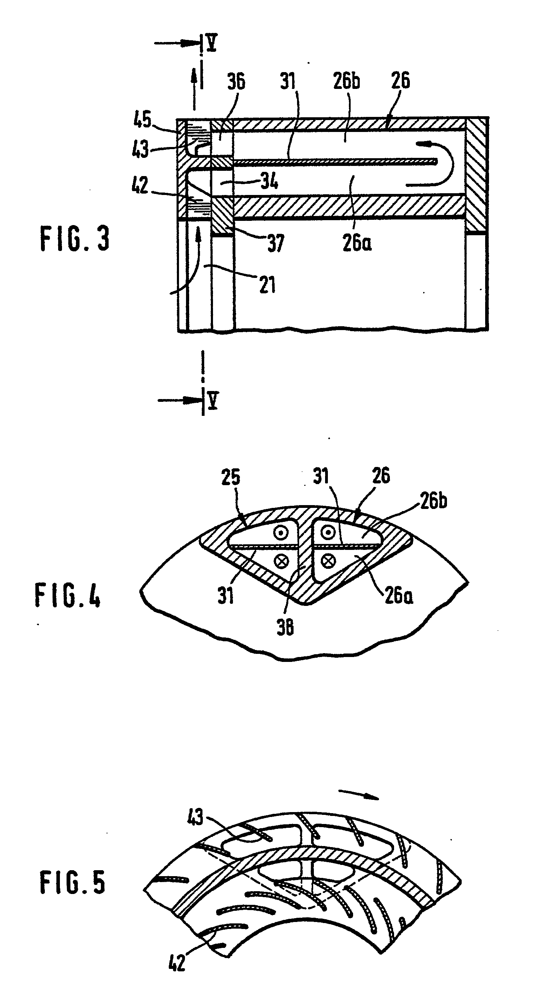

Die beidseitig an den Läufern 2,3 vorgesehenen Wälzlager 10 bis 13 sind an den Seitenplatten 14,15 des Gehäuses 1 abgestützt , wobei die den Aussenläufer 2 lagernden Wälzlager 10,12 einen verhältnismässig grossen Durchmesser haben, da sie die die Wellenzapfen 16,17 des Innenläufers 3 umschliessenden Wälzlager 11,13 umschliessen und ausserdem der Abstand zwischen den Achsen beider Läufer 2,3 berücksichtigt ist. Durch diesen Abstand, bzw. durch die somit vorhandene seitliche Versetzung des umschlossenen Wälzlagers 13 ist in der die Wälzlager 12,13 tragenden Seitenplatte 15 des Gehäuses ein wesentlicher unbesetzter Bereich 18 vorhanden, durch den hindurch beim Ausführungsbeispiel nach Fig.1 ein Zuluftkanal 19 für Kühlluft geführt ist. Ein zwischen der Seitenplatte 15 und einer zu ihr parallelen Dichtplatte 20 vorgesehener Spaltraum 21 ermöglicht die Weiterführung der Kühlluft in Richtung zu Kühlluftkanälen 23,24 (Fig.1) bzw. 25,26 (Fig.4), die in den Eingriffsteilen 2a, 2b,2c des Aussenläufers 2 vorgesehen sind. Die genannte Dichtplatte dichtet die Arbeitsräume der Maschine, ebenso wie die gegenüberliegend angeordnete Dichtplatte 28, in axialer Richung nach aussen ab und ist hierzu in radialer Richtung von der Seitenwand 29 bzw. 7 des Aussenläufers 2 dichtend umschlossen.

Die Kühlluftkanäle 23 bis 26 sind durch eine eingesetzte dünne Trennwand 30,31 über den grösseren Teil ihrer Länge unterteilt, so dass sie je einen Teilkanal 24a,24b; 26a,26b für die Zu- und Abfuhr von Kühlluft aufweisen. Diese Trennwand unterteilt auch die nur an einem axialen Ende vorgesehene Oeffnung der Kühlluftkanäle in eine Zuströmöffnung 33 bzw. 34 und eine Abströmöffnung 35 bzw. 36, die folglich durch die Seitenwand 29 bzw. 37 des Aussenläufers hindurchgeführt sind.

Im Ausführungsbeispiel nach Fig.1 und 2 sind die Kühlluftkanäle 23,24 in die Eingriffsteile 2a,2b,2c eingebohrt und haben somit einen kreisförmigen Querschnitt. Gemäss den übrigen Ausführungsbeispielen (Fig. 3 bis 7) sind die Kühlluftkanäle bei der Herstellung der Eingriffsteile im Giessverfahren mit eingeformt und bilden gleichzeitig Hohlräume für die Verringerung des Gewichts dieser starken Zentrifugalkräften ausgesetzten Eingriffsteile 2a,2b,2c. Dabei können die Trennwände 31 auch zuvor in die Giessform eingesetzt und somit eingegossen werden. Gemäss Fig.4 sind zwei Kühlluftkanäle 25,26 mit nahezu maximaler Querschnittsgrösse in Umfangsrichtung nebeneinander vorgesehen und durch einen Verstärkungssteg 38 voneinander getrennt.

Für eine Verstärkung der Zirkulation von Kühlluft durch die Küllluftkanäle sind in bevorzugter Ausführungsform der Erfindung vor oder in den Zu- und Abströmöffnungen der Teilkanäle 24a,24b bzw 26a,26b Luftförderschaufeln 40,41 bzw. 42,43 vorgesehen, die wie übliche Ventilatorschaufeln gekrümmt sind und zu mehreren schaufelkranzförmig in Umfangsrichtung nebeneinander angeordnet sein können. Diese Luftförderschaufeln können in einer zusätzlichen Schaufelplatte 44,45 gehalten sein, die entsprechend den Fig.1 und 3 an der Seitenwand 29 bzw. 37 des Aussenläufers 2 befestigt ist und für den Spaltraum 21 eine entsprechend grosse Oeffnung aufweist. Für die Abströmung der Kühlluft radial nach aussen sind in der Umfangswand 46 des Gehäuses 1 Oeffnungen 47 vorhanden.

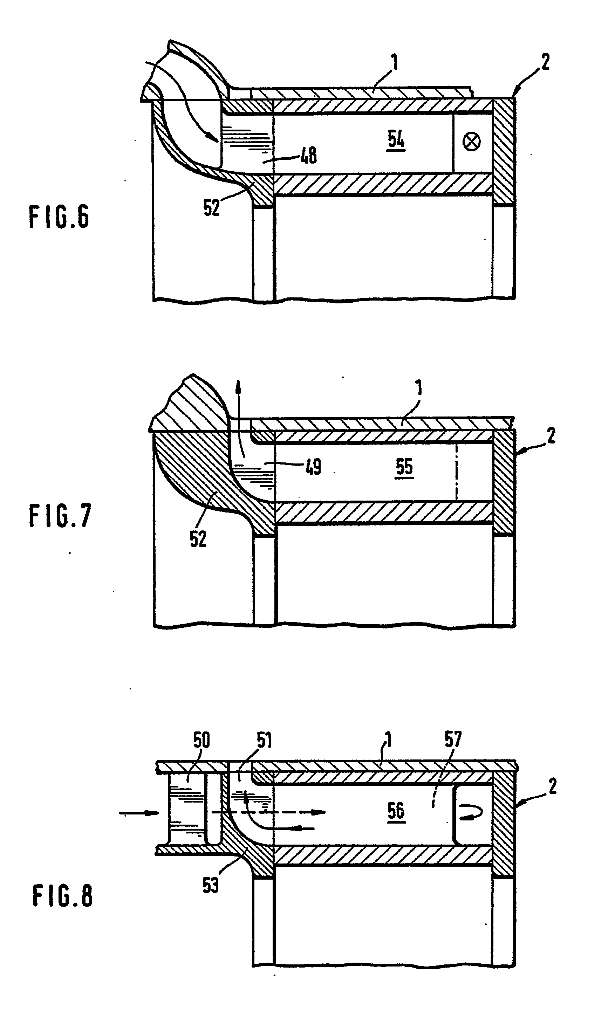

Entsprechend den Ausführungsformen gemäss den Fig. 6 bis 7 sind die Luftförderschaufeln 48,49 bzw. 50,51 in einem Schaufelring 52 bzw. 53 vorgesehen, der auch die die Eingriffsteile 2a,2b,2c tragende Seitenwand des Aussenläufers 2 bildet. Ausserdem sind im Gegensatz zum zuvorbeschriebenen Ausführungsbeispiel die Teilkanäle 54,55 bzw. 56,57 in Umfangsrichtung des Aussenläufers 2 nebeneinander angeordnet und folglich auch die Luftförderschaufeln. Gemäss Fig. 7 sind die Luftförderschaufeln ausserdem in axialer Richtung nebeneinander angeordnet, wobei die Zuströmung axial erfolgt und die Abströmung radial nach aussen.

Auf nicht dargestellte Weise können die Luftförderschaufeln auch auf die Abströmöffnung oder auch auf die Zuströmöffnung der Kühlluftkanäle beschränkt sein.

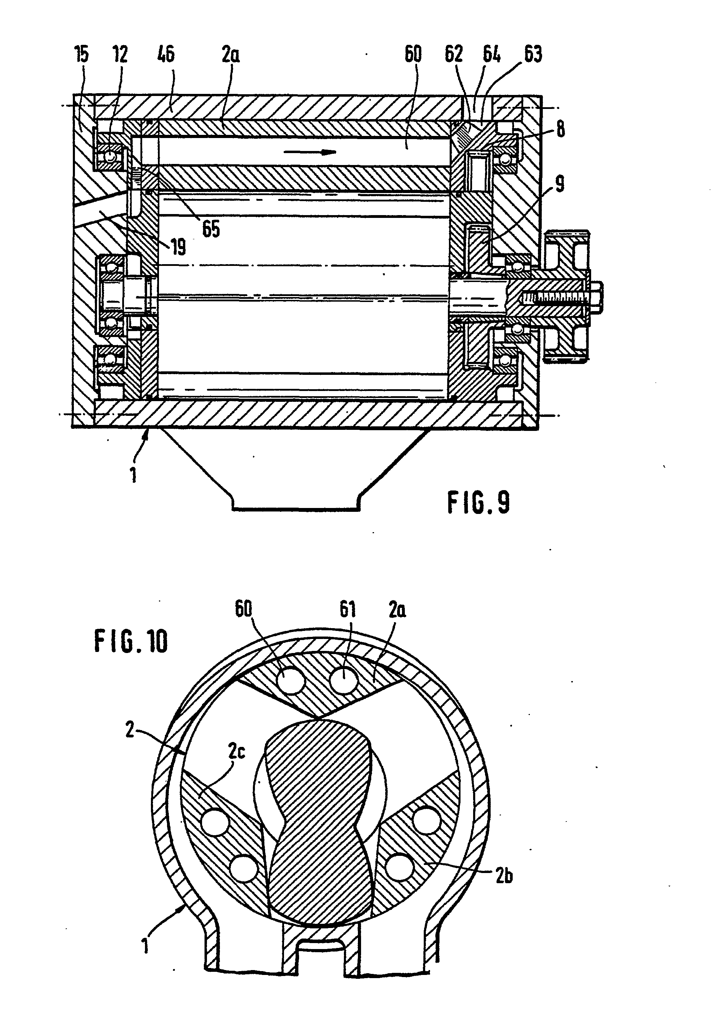

Fig. 9 und 10 zeigen ein Ausführungsbeispiel der Erfindung bei dem auf eine Umlenkung und Rückführung des Kühlluftstromes verzichtet wurde, indem die in jedem Eingriffsteil 2a, 2b,2c vorgesehenen Kühlluftkanäle 60,61 durchgehend sind und auf der die Zahnräder 8,9 tragenden Seite der Maschine einen schräg radial nach aussen gerichteten und vorzugsweise Luftförderschaufeln 62 einschliessenden Abströmkanal 63 aufweisen, der zu radial nach aussen gerichteten Oeffnungen 64 in der Umfangswand 46 des Gehäuses 1 hinführt.

Die Zuströmung der Kühlluft erfolgt vorteilhaft, wie bei den zuvor beschriebenen Ausführungsbeispielen, über einen Zuluftkanal 19 in der Seitenplatte 15 des Gehäuses 1 innerhalb des den Aussenläufer 2 lagernden Wälzlagers 12 und unterstützt durch Luftförderschaufeln 65, so dass sich in Richtung zu den Kühlluftkanälen 60,61 eine zentrifugalventilatorartige radial nach aussen gerichtete Zuströmung ergibt.

**Patentansprüche**

1. Innenachsige Drehkolbenmaschine, deren Außen- und Innenläufer (2, 3) beidseitig gelagert sind, wobei die die Lager (11, 13) des Innenläufers (3) umschließenden Lager (10, 12) des Außenläufers (2) an Seitenwandringen (7, 29, 37, 52, 53) vorgesehen sind, die die Eingriffsteile (2a, 2b, 2c) des Außenläufers (2) zueinander fixieren oder an diesen befestigten Ringen (44, 45) und wobei beide Läufer (2, 3) über Zahnräder miteinander in Antriebsverbindung stehen, dadurch gekennzeichnet, daß in den Eingriffsteilen (2a, 2b, 2c) des Außenläufers (2) mindestens ein axialgerichteter Kühlluftkanal (23–26, 54–57, 60, 61) mit einer Zuströmöffnung (33, 34; 19) und einer Abströmöffnung (35, 36, 63) vorgesehen ist, der mit einem eine Umlenkung aufweisenden Kanalstück verbunden ist, das sich in dem Seitenwandring (52, 53, Fig. 9) oder einem an diesem befestigten Ring (44, 45, Fig. 9) befindet.

2. Innenachsige Drehkolbenmaschine nach Anspruch 1, dadurch gekennzeichnet, daß in dem Seitenwandring (52, 53, Fig. 9) oder einem an diesem befestigten Ring (44, 45, Fig. 9) mindestens eine Luftförderschaufel (40–43, 48–51, 62, 65) vorgesehen ist.

3. Innenachsige Drehkolbenmaschine nach Anspruch 2, dadurch gekennzeichnet, daß die Luftförderschaufeln (40–43, 49, 51, 62, 65) in einem radial gerichteten Teil des Kanalstückes angeordnet sind.

4. Innenachsige Drehkolbenmaschine nach Anspruch 2 oder 3, dadurch gekennzeichnet, daß die Luftförderschaufeln (40–43, 48–51, 62, 65) an der Zu- und/oder Abströmöffnung (33–36) der Kühlluftkanäle (23–26, 54–57, 60, 61) angeordnet sind.

5. Innenachsige Drehkolbenmaschine nach einem der Ansprüche 2 bis 4, dadurch gekennzeichnet, daß die Luftförderschaufeln (40–43, 48–51, 62, 65) einen Schaufelkranz (Fig. 5) bilden.

**Claims**

1. Internally axed single-rotation machine, the internal and external rotors (2, 3) of which being carried at their both ends, whereby the bearings (10, 12) of the external rotor (2) surround the bearings (11, 13) of the internal rotor (3) and are provided on side wall rings (7, 29, 37, 52, 53) which fix the engaging parts (2a, 2b, 2c) of the external rotor (2) to each other or at rings (44, 45) attached thereon, and whereby both rotors (2, 3) by gears are in driving connection, characterized in that in the engaging parts (2a, 2b, 2c) of the external rotor (2) at least one axially parallel cooling air duct (23–26, 54–57, 60, 61) with an inflow opening (33, 34; 19) and an outflow opening (35, 36, 63) is provided, which is connected to a reversing partial duct located in the side wall ring (52, 53, Fig. 9) or in a ring (44, 45, Fig. 9) attached thereon.

2. Internally axed single-rotation machine according to claim 1, characterized in that at least one air feed blade (40–43, 48–51, 62, 65) is provided in the side wall ring (52, 53, Fig. 9) or in a ring (44, 45, Fig. 9) attached thereon.

3. Internally axed single-rotation machine according to claim 2, characterized in that the air feed blades (40, 43, 49, 51, 62, 65) are provided on a radially directed part of the partial duct.

4. Internally axed single-rotation machine according to claim 2 or 3, characterized in that the air feed blades (40–43, 48–51, 62, 65) are provided on the inflow and/or outflow opening (33–36) of the cooling air ducts (23–26, 54–57, 60, 61).

5. Internally axed single-rotation machine according to one of claims 2 to 4, characterized in that the air feed blades (40–43, 48–51, 62, 65) form a blade ring (Fig. 5).

## Revendications

1. Machine à piston rotatif à axe interne dont le rotor externe et le rotor interne (2, 3) sont montés sur palier des deux côtés, les paliers (10, 12) du rotor externe (2), qui entourent les paliers (11, 13) du rotor interne (3), étant prévus sur des parois latérales annulaires (7, 29, 37, 52, 53), qui immobilisent les unes par rapport aux autres les pièces d'engrènement (2a, 2b, 2c) du rotor externe (2), ou sur des bagues (44, 45) fixées à celui-ci, et les deux rotors (2, 3) étant reliés à entraînement l'un avec l'autre par l'intermédiaire de roues dentées, caractérisée en ce que, dans les pièces d'engrènement (2a, 2b, 2c) du rotor externe (2), a été prévu au moins un canal d'air de refroidissement (23-26, 54-57, 60, 61), orienté suivant l'axe, comportant un orifice d'arrivée (33, 34; 19) et un orifice de sortie (35, 36, 63) du courant d'air, canal qui est relié à une section de canal, qui présente un coude et qui se trouve dans la paroi latérale annulaire (52, 53, figure 9) ou dans une bague (44, 45, figure 9) fixée à celle-ci.

2. Machine à piston rotatif à axe interne suivant la revendication 1, caractérisée en ce que, dans la paroi latérale annulaire (52, 53, figure 9) ou dans une bague (44, 45, figure 9) fixée à celle-ci, est prévue au moins une ailette de brassage d'air (40-43, 48-51, 62, 65).

3. Machine à piston rotatif à axe interne suivant la revendication 2, caractérisée en ce que les ailettes de brassage d'air (40-43, 48-51, 62, 65) sont disposées dans une partie dirigée axialement de la section de canal.

4. Machine à piston rotatif à axe interne suivant la revendication 2 ou la revendication 3, caractérisée en ce que les ailettes de brassage d'air (40-43, 48-51, 62, 65) sont disposées aux orifices d'arrivée et/ou de sortie (33-36) du courant d'air.

5. Machine à piston rotatif à axe interne suivant l'une quelconque des revendications 2 à 4, caractérisée en ce que les ailettes de brassage d'air (40-43, 48-51, 62, 65) forment une couronne d'ailettes (figure 5).

FIG.1

FIG.2

FIG. 3

FIG.4

FIG.5

FIG.6

FIG.7

FIG.8

FIG. 9

FIG. 10